# EUROPEAN PATENT APPLICATION

(11) **EP 4 831 353 A1**
(43) Date of publication of application: **28.10.2026**
(21) Application number: 24907797.5
(22) Date of filing: 12.11.2024
(51) Int. Cl.: C25B 11/093, C25B 11/077, C25B 1/04, C25B 9/19, C25B 13/08, C25B 13/02, B01J 35/45, B01J 35/00, B01J 35/60, B01J 37/08

(54) **CATALYST FOR OXYGEN EVOLUTION REACTION OF WATER ELECTROLYSIS CELL, METHOD FOR MANUFACTURING SAME, AND MEMBRANE-ELECTRODE ASSEMBLY FOR WATER ELECTROLYSIS CELL AND WATER ELECTROLYSIS CELL COMPRISING SAME**

(30) Priority: 22.12.2023 KR 20230190212; 07.11.2024 KR 20240157361
(71) Applicant: Kolon Industries, Inc., Seoul 07793 (KR)
(72) Inventor: KIM, Jung Ho, Seoul 07793 (KR); KIM, Jun Young, Seoul 07793 (KR); LEE, Ju Sung, Seoul 07793 (KR); LIM, Youngjoon, Seoul 07793 (KR); PARK, Hyun Jin, Seoul 07793 (KR)
(74) Representative: Vossius & Partner Patentanwälte Rechtsanwälte mbB
(86) International application number: PCT/KR2024/017871
(87) International publication number: WO 2025/135512

(57) **Abstract**

The present disclosure relates to: a catalyst for an oxygen evolution reaction of a water electrolysis cell; a method for manufacturing same; and a membrane-electrode assembly for a water electrolysis cell, and a water electrolysis cell, comprising same. More specifically, by manufacturing a catalyst for oxygen evolution reaction of a water electrolysis cell, having a structure in which active particles fill pores between nanoparticles of a support assembly manufactured in various forms or penetrate into the support assembly while being supported by the support assembly, performance is improved while reducing the amount of noble metal used. The active particles have stronger bonds than a form in which active particles are simply supported, and thus the active particles and the support assembly can have improved durability.

## Description

### [Technical Field]

The present disclosure relates to a catalyst for an oxygen evolution reaction of a water electrolysis cell and a method of manufacturing the same, and a membrane-electrode assembly for a water electrolysis cell and a water electrolysis cell including the same, and more specifically, to a catalyst for an oxygen evolution reaction of a water electrolysis cell and a method of manufacturing the same, and a membrane-electrode assembly for a water electrolysis cell and a water electrolysis cell including the same, in which by manufacturing the catalyst for the oxygen evolution reaction of the water electrolysis cell having a structure in which active particles fill pores between nanoparticles of a support aggregate manufactured in various shapes or are supported on the support aggregate while penetrating into an inside thereof, a usage amount of a noble metal is reduced while performance is improved, and the active particles have a stronger bond than a simply supported shape, thereby improving durability of the active particles and the support aggregate.

The present disclosure relates to a result of a project (Project ID: 20022451) conducted with the support of the Materials and Components Technology Development Program of the Ministry of Trade, Industry and Energy and the Korea Evaluation Institute of Industrial Technology (KEIT).

### [Background Art]

Recent energy demands and environments require sustainability, environmental friendliness, and high efficiency, and accordingly, the necessity of developing new energy sources and energy utilization devices is emerging. Renewable energy represented by solar power, wind power, and the like is receiving a lot of attention because it has environmentally friendly and sustainable features and advantages, and thus may replace fossil fuels that cause environmental problems and are being depleted.

However, such renewable energy has an unstable supply due to inconsistent weather, regional constraints and characteristics, and the like, which is an obstacle to its expansion as a next-generation power generation source.

To overcome this, hydrogen is attracting attention as a source of renewable energy.

Hydrogen energy is classified into gray, blue, and green hydrogen according to a production method, and gray hydrogen refers to byproduct hydrogen produced as a byproduct of a petrochemical or steelmaking process and extracted hydrogen generated by a catalytic reaction utilizing fossil fuels, and blue hydrogen refers to hydrogen obtained by capturing carbon dioxide emitted during the production of gray hydrogen and not emitting it into the atmosphere.

Because gray and blue hydrogen present the problem that carbon dioxide is generated during the production process or cannot be completely removed, as these methods use fossil fuels.

Green hydrogen refers to hydrogen produced by electrolyzing limitless water, and because carbon dioxide is not generated in a process of producing hydrogen, it is in the spotlight as an ultimate eco-friendly energy source. To produce green hydrogen, water electrolysis technology is required.

Water electrolysis technology refers to an electrochemical technology that generates hydrogen and oxygen by electrolyzing water and transporting ions through a separator. Water electrolysis may be classified into two half-cell reactions, one of which is a hydrogen evolution reaction (HER) occurring at a reduction electrode, and the other of which is an oxygen evolution reaction (OER) occurring at an oxidation electrode.

The types of the water electrolysis, depending on the electrolyte membrane, representatively include polymer electrolyte membrane (PEM) water electrolysis, alkaline electrolysis (AEC, Alkalnie electrolysis), anion exchange membrane (AEM) water electrolysis, and solid oxide electrolysis cells (SOECs).

As a technology related to a catalyst for water electrolysis, particularly a catalyst of an oxygen evolution electrode of polymer electrolyte membrane (PEM) water electrolysis, iridium black and iridium oxide powder have been used as a catalyst for an oxygen evolution reaction used in a conventional polymer electrolyte membrane water electrolysis oxygen evolution electrode, but improvement on their low dispersibility, low electrical conductivity, and instability is required.

In addition, due to a high cost of iridium raw material, there is a need to reduce the amount of iridium used.

### [Disclosure]

### [Technical Problem]

According to an embodiment, provided is a catalyst for an oxygen evolution reaction of a water electrolysis cell, wherein the catalyst has a structure in which active particles fill pores between nanoparticles of a support aggregate manufactured in various shapes, or are supported on the support aggregate while penetrating into an inside thereof, whereby a usage amount of a noble metal is reduced, performance is improved, and the durability of the active particles and the support aggregate may be enhanced due to the active particles having a stronger bond than those in a simply supported form.

According to another embodiment, provided is a method of manufacturing the catalyst for an oxygen evolution reaction of a water electrolysis cell.

According to another embodiment, a membrane-electrode assembly comprising the catalyst for an oxygen evolution reaction of a water electrolysis cell, and a water electrolysis cell comprising the same are provided.

### [Technical Solution]

A catalyst for an oxygen evolution reaction of a water electrolysis cell according to an embodiment comprises a support aggregate in which a plurality of nanoparticles are aggregated; and active particles filling pores between the nanoparticles of the support aggregate or supported on the support aggregate, and the nanoparticles may comprise a first metal oxide, and the active particles may comprise a second metal oxide different from the first metal oxide.

A BET specific surface area of the support aggregate may be in a range of 100 m²/g to 300 m²/g.

The support aggregate may have a nanosphere or nanowire shape.

When the support aggregate has the nanosphere shape, the catalyst for the oxygen evolution reaction of the water electrolysis cell also has the nanosphere shape, and a diameter of the catalyst may be in a range of 40 nm to 400 nm.

When the support aggregate has the nanowire shape, the catalyst for the oxygen evolution reaction of the water electrolysis cell also has the nanowire shape, and a ratio (wᵣ/wₗ) of a diameter (wᵣ) to a length (wₗ) of the catalyst may be in a range of 0.05 to 0.9.

A diameter of the nanoparticles may be in a range of 2 nm to 40 nm.

The first metal oxide may comprise titanium dioxide (TiO₂).

The second metal oxide may comprise a noble metal oxide.

The noble metal oxide may include IrOₓ (wherein x is an integer of 1 to 3), RuOₓ (wherein x is an integer of 1 to 3), IrMOₓ (wherein M includes Ru, Pt, Sn, Se, Sb, Ta, Te, Nb, W, Zn, Au, or a combination thereof, and x is an integer of 1 to 3), or a combination thereof.

The active particles may be included in a range of 20 wt% to 70 wt% based on 100 wt% of the catalyst for the oxygen evolution reaction.

A method of manufacturing a catalyst for an oxygen evolution reaction of a water electrolysis cell according to another embodiment comprises: aggregating nanoparticles comprising a first metal oxide to form a support aggregate; and filling pores between the nanoparticles of the support aggregate with active particles comprising a second metal oxide.

The method of manufacturing the catalyst for the oxygen evolution reaction of the water electrolysis cell further comprises manufacturing the nanoparticles comprising the first metal oxide using a first metal oxide precursor, and the first metal oxide precursor may include titanium alkoxide, TiCl₄, Ti(OH)₄, Ti(SO₄)₂, or a combination thereof.

Forming the support aggregate by aggregating the nanoparticles comprising the first metal oxide may comprise: forming the support aggregate having a nanosphere shape by dispersing the nanoparticles comprising the first metal oxide in a solvent and then aggregating the nanoparticles; or forming the support aggregate having a nanowire shape by filling the nanoparticles comprising the first metal oxide into a template.

Filling the pores between the nanoparticles of the support aggregate with the active particles comprising the second metal oxide comprises: obtaining a precursor solution by mixing an active particle precursor and a weak reducing agent in a solution comprising the support aggregate such that a weight ratio is in a range of 1:1 to 1:10; adsorbing the active particle precursor into the pores between the nanoparticles of the support aggregate by performing a vacuum adsorption process on the precursor solution; and performing a heat treatment process on the precursor solution after performing the vacuum adsorption process, and the active particle precursor comprises a noble metal chloride, a noble metal acetate, a noble metal aminate, or a combination thereof, and the weak reducing agent may include formaldehyde, formic acid, oxalic acid, ascorbic acid, citric acid, urea, ethylenediamine, hexamethylenetetramine, or a mixture thereof.

The vacuum adsorption may be performed at 5 kPa to 20 kPa.

The heat treatment process may be performed at a temperature of 80 °C to 140 °C for 1 hour to 4 hours.

A membrane-electrode assembly for a water electrolysis cell according to another embodiment may comprise: a polymer electrolyte membrane; an oxygen evolution electrode positioned on one surface of the polymer electrolyte membrane, and comprising the catalyst for the oxygen evolution reaction of the water electrolysis cell and an ion conductor; and a hydrogen evolution electrode positioned on another surface of the polymer electrolyte membrane, and comprising a carbon-based support, and active particles supported on the carbon-based support and comprising a noble metal.

In the membrane-electrode assembly for the water electrolysis cell, a voltage increase rate represented by Equation 1 below may be less than or equal to 3%. [Equation 1] 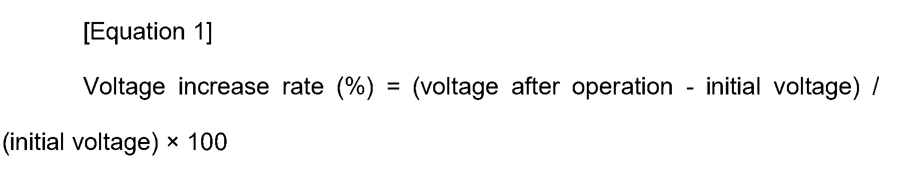 Voltage increase rate (%) = (voltage after operation - initial voltage)/ (initial voltage) × 100

The oxygen evolution electrode may include the catalyst for the oxygen evolution reaction in a range of 65 wt% to 95 wt% based on 100 wt% of the oxygen evolution electrode.

The polymer electrolyte membrane may comprise a porous support comprising a plurality of pores, and an ion conductor filling the pores of the porous support.

According to another embodiment, a water electrolysis cell comprises the membrane-electrode assembly.

### [Advantageous Effects]

A catalyst for an oxygen evolution reaction of a water electrolysis cell according to an embodiment may have a structure in which active particles fill pores between nanoparticles of a support aggregate manufactured in various shapes, or are supported on the support aggregate while penetrating into an inside thereof, thereby reducing a usage amount of a noble metal while improving performance, and the active particles may have a stronger bond than in a simply supported shape, thereby improving durability of the active particles and the support aggregate.

### [Brief Description Of The Drawings]

FIG. 1 is a schematic diagram illustrating a catalyst for an oxygen evolution reaction of a water electrolysis cell including a support aggregate having a nanosphere shape and active particles according to an embodiment.
FIG. 2 is a schematic diagram illustrating a catalyst for an oxygen evolution reaction of a water electrolysis cell including a support aggregate having a nanowire shape and active particles according to an embodiment.
FIG. 3 is a schematic diagram illustrating a membrane-electrode assembly (MEA) for a water electrolysis cell according to another embodiment.
FIGS. 4 and 5 are scanning electron microscope (SEM) images of a catalyst for an oxygen evolution reaction of a water electrolysis cell including support aggregates and active particles manufactured in Preparation Example 2-1 and Preparation Example 2-2, respectively.
FIG. 6 is a transmission electron microscope (TEM) image of a catalyst for an oxygen evolution reaction supported on TiO₂ of Comparative Example 3.
FIG. 7 is a graph illustrating BET specific surface area analysis results of the support aggregates manufactured in Preparation Example 2-1 and Preparation Example 2-2, and catalysts for an oxygen evolution reaction of a water electrolysis cell manufactured in Examples 1 and 2 including the same.
FIG. 8 is a graph illustrating results of evaluating I-V characteristics of membrane-electrode assemblies including a catalyst for an oxygen evolution reaction of a water electrolysis cell manufactured in Examples 1 and 2 and Comparative Examples 1 to 3.

### [Best Mode]

Hereinafter, embodiments of the present disclosure will be described in detail so that those of ordinary skill in the art to which the present disclosure pertains may easily implement them. However, the present disclosure may be implemented in various different forms and is not limited to the embodiments described herein.

In the present specification, "a combination thereof" means a mixture, a laminate, a composite, a copolymer, an alloy, a blend, a reaction product, or the like of components.

In the present specification, terms such as "comprise," "include," or "have" are intended to designate the presence of stated features, numbers, steps, components, or a combination thereof, and it should be understood that they do not preclude the possibility of the presence or addition of one or more other features, numbers, steps, components, or combinations thereof.

In the present specification, terms are used only for the purpose of distinguishing one component from another component. A singular expression includes a plural expression unless the context clearly indicates otherwise.

Unless otherwise defined in the present specification, "substitution" means that a hydrogen atom in a compound is substituted with a substituent including a halogen atom (F, Cl, Br, or I), a hydroxy group, an alkoxy group, a nitro group, a cyano group, an amino group, an azido group, an amidino group, a hydrazino group, a hydrazono group, a carbonyl group, a carbamyl group, a thiol group, an ester group, a carboxyl group or a salt thereof, a sulfonic acid group or a salt thereof, phosphoric acid or a salt thereof, a C1 to C20 alkyl group, a C2 to C20 alkenyl group, a C2 to C20 alkynyl group, a C6 to C30 aryl group, a C7 to C30 arylalkyl group, a C1 to C4 alkoxy group, a C1 to C20 heteroalkyl group, a C3 to C20 heteroarylalkyl group, a C3 to C30 cycloalkyl group, a C3 to C15 cycloalkenyl group, a C6 to C15 cycloalkynyl group, a C2 to C20 heterocycloalkyl group, or a combination thereof.

Unless otherwise defined in the present specification, an "alkyl group" refers to a straight-chain or branched-chain, saturated, monovalent hydrocarbon group (for example, a methyl group, an ethyl group, a propyl group, an isobutyl group, a sec-butyl group, a tert-butyl group, a pentyl group, an iso-amyl group, a hexyl group, etc.).

Unless otherwise defined in the present specification, an "alkenyl group" refers to a straight-chain or branched-chain, unsaturated, monovalent hydrocarbon group having at least one carbon-carbon double bond (for example, an ethenyl group).

Unless otherwise defined in the present specification, an "alkoxy group" refers to an alkyl group connected through oxygen, and for example, means a methoxy group, an ethoxy group, and a sec-butyloxy group.

### 1. Catalyst for an oxygen evolution reaction of a water electrolysis cell

In the present specification, a catalyst for an oxygen evolution reaction refers to a catalyst applied to an electrode on which an oxygen evolution reaction (OER) is performed (hereinafter, an "oxygen evolution electrode"). That is, it is a catalyst included in the oxygen evolution electrode to be described later.

According to an embodiment, a catalyst for an oxygen evolution reaction of a water electrolysis cell comprises a support aggregate in which a plurality of nanoparticles are aggregated, and active particles filling pores between the nanoparticles of the support aggregate or supported on the support aggregate.

Hereinafter, the support aggregate and the active particles will be described in detail.

The support aggregate refers to a support having a structure in which a plurality of nanoparticles are aggregated. In this case, the plurality of nanoparticles are aggregated to such an extent that pores may exist between the nanoparticles, and accordingly, the support aggregate may have pores between the nanoparticles.

Due to the pores, the support aggregate may have a BET specific surface area within a predetermined range. The method for measuring the BET specific surface area follows the method described in "BET specific surface area analysis" in Evaluation Example 1 of the present specification.

For example, a lower limit of the BET specific surface area of the support aggregate may be about 100 m²/g, 110 m²/g, 120 m²/g, 130 m²/g, 140 m²/g, 150 m²/g, 160 m²/g, 170 m²/g, 180 m²/g, 190 m²/g, 200 m²/g, 205 m²/g, 210 m²/g, 215 m²/g, 220 m²/g, 225 m²/g, 230 m²/g, or 235 m²/g, and an upper limit thereof may be about 300 m²/g, 295 m²/g, 290 m²/g, 285 m²/g, 280 m²/g, 275 m²/g, 270 m²/g, 265 m²/g, 260 m²/g, 255 m²/g, 250 m²/g, 245 m²/g, 240 m²/g, 234 m²/g, 230 m²/g, 225 m²/g, 220 m²/g, 215 m²/g, 210 m²/g, or 205 m²/g.

The BET specific surface area of the support aggregate may be greater than or equal to, or greater than any one lower limit among the above-described lower limits; may be less than or equal to, or less than any one upper limit among the above-described upper limits; or may have a range of greater than or equal to, or greater than any one lower limit among the above-described lower limits and less than or equal to, or less than any one upper limit among the above-described upper limits.

When the BET specific surface area of the support aggregate satisfies the above range, the active particles and the support aggregate may have a strong bonding force, thereby improving the durability of the active particles and the support aggregate, and the active particles may be sufficiently filled in the pores of the support aggregate, thereby allowing the catalyst to have sufficient activity. In addition, it may be practically difficult to aggregate a plurality of nanoparticles to manufacture a support aggregate having a BET specific surface area exceeding the above value. This is because the nanoparticles constituting the support aggregate do not have a porous shape having separate pores.

The support aggregate may have various shapes as the plurality of nanoparticles are aggregated. For example, the support aggregate may have a shape such as a nanosphere, a nanowire, a nanorod, a nanosheet, or a nanocapsule.

According to an embodiment, a support aggregate may have a nanosphere or nanowire shape. The shape of the catalyst for an oxygen evolution reaction of a water electrolysis cell may be determined according to the shape of the support aggregate.

According to an embodiment, a support aggregate may have a nanosphere shape. When the support aggregate has a nanosphere shape, the BET specific surface area of the support aggregate may be in a range of 100 m²/g to 250 m²/g.

When the support aggregate has the nanosphere shape, the catalyst for an oxygen evolution reaction of a water electrolysis cell including the support aggregate may also have a nanosphere shape.

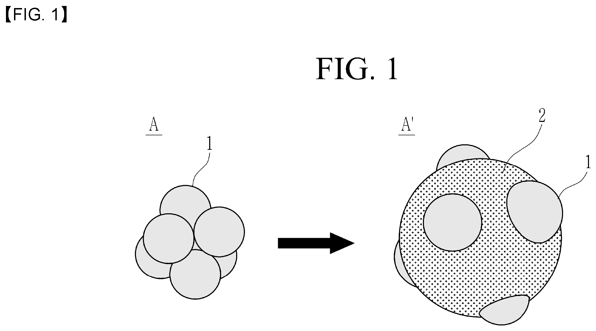

FIG. 1 is a schematic diagram illustrating a catalyst (A^{'}) for an oxygen evolution reaction of a water electrolysis cell, the catalyst including a support aggregate (A) having a nanosphere shape. The left side of FIG. 1 illustrates the support aggregate (A) having a nanosphere shape in which a plurality of nanoparticles (1) are aggregated, and the right side of FIG. 1 illustrates a catalyst (A^{'}) for an oxygen evolution reaction of a water electrolysis cell comprisng the support aggregate having the nanosphere shape in which a plurality of nanoparticles (1) are aggregated, and active particles (2) filling pores of the support aggregate or supported on the support aggregate.

As illustrated in FIG. 1, the catalyst for an oxygen evolution reaction (A^{'}) comprising a support aggregate having a nanosphere shape may have a nanosphere shape, which is the same shape as the support aggregate (A).

The diameter of the catalyst for an oxygen evolution reaction having the nanosphere shape may be within a predetermined range. The diameter of the catalyst for an oxygen evolution reaction may be measured from an image of the catalyst for an oxygen evolution reaction taken using a scanning electron microscope (SEM). The diameter may be an average diameter. In this case, the average diameter of the catalyst for an oxygen evolution reaction may be calculated by dividing a sum of diameters of the catalyst for an oxygen evolution reaction measured from the image of the catalyst for an oxygen evolution reaction taken using the scanning electron microscope (SEM) by the number of the measured catalysts for an oxygen evolution reaction.

A lower limit of the diameter of the catalyst for an oxygen evolution reaction may be about 40 nm, 50 nm, 60 nm, 70 nm, 80 nm, 90 nm, 100 nm, 110 nm, 120 nm, 130 nm, 140 nm, or 150 nm, and an upper limit thereof may be about 400 nm, 380 nm, 360 nm, 340 nm, 320 nm, 300 nm, 280 nm, 260 nm, 240 nm, 220 nm, 200 nm, 190 nm, 180 nm, 170 nm, 160 nm, or 150 nm.

The diameter of the catalyst for an oxygen evolution reaction may be greater than or equal to, or greater than any one lower limit among the above-described lower limits; less than or equal to, or less than any one upper limit among the above-described upper limits; or may have a range of greater than or equal to, or greater than any one lower limit among the above-described lower limits and less than or equal to, or less than any one upper limit among the above-described upper limits.

According to another embodiment, a support aggregate may have a nanowire shape.

When the support aggregate has the nanowire shape, the catalyst for an oxygen evolution reaction of a water electrolysis cell comprising the support aggregate may have a nanowire shape. When the support aggregate has the nanowire shape, the BET specific surface area of the support aggregate may be in a range of 150 m²/g to 300 m²/g.

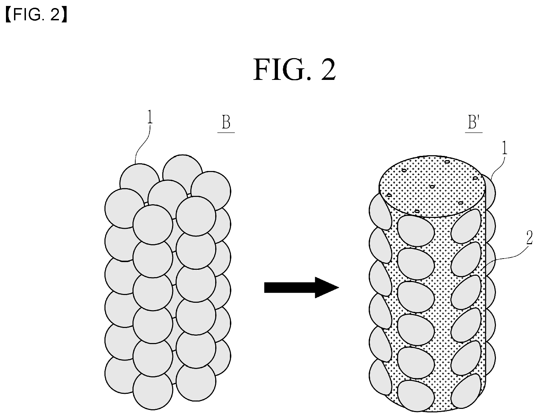

FIG. 2 is a schematic diagram illustrating a catalyst (B^{'}) for an oxygen evolution reaction of a water electrolysis cell comprising the support aggregate (B) having the nanowire shape. The left side of FIG. 2 illustrates the support aggregate (B) having the nanowire shape in which a plurality of nanoparticles (1) are aggregated, and the right side of FIG. 2 illustrates the catalyst for an oxygen evolution reaction of a water electrolysis cell (B^{'}) including the support aggregate having the nanowire shape in which the plurality of nanoparticles (1) are aggregated and active particles (2) filling pores of the support aggregate or supported on the support aggregate.

As illustrated in FIG. 2, the catalyst for an oxygen evolution reaction including a support aggregate having a nanowire shape may have a nanowire shape, which is the same shape as the support aggregate.

In this case, a ratio (wr/wl) of a diameter (wᵣ) to a length (wₗ) of the catalyst for an oxygen evoₗution reaction having the nanowire shape may be within a predetermined range. The diameter (wᵣ) and the length (wₗ) of the catalyst for an oxygen evolution reaction may be measured from an image of the catalyst for an oxygen evolution reaction taken using a scanning electron microscope (SEM). A lower limit of the ratio (wᵣ/wₗ) of the diameter (wᵣ) to the length (wₗ) of the catalyst for an oxygen evoₗution reaction may be about 0.05, 0.06, 0.07, 0.08, 0.09, 0.1, 0.11, 0.12, 0.13, 0.14, 0.15, 0.16, 0.17, 0.18, 0.19, 0.2, or 0.25, and an upper limit thereof may be about 0.9, 0.85, 0.8, 0.75, 0.7, 0.65, 0.6, 0.55, 0.5, 0.45, 0.4, 0.35, 0.3, or 0.25.

The ratio (wᵣ/wₗ) of the catalyst for an oxygen evolution reaction may be greater than or equal to, or greater than any one lower limit among the above-described lower limits; less than or equal to, or less than any one upper limit among the above-described upper limits; or may have a range of greater than or equal to, or greater than any one lower limit among the above-described lower limits and less than or equal to, or less than any one upper limit among the above-described upper limits.

The diameter of the nanoparticles included in the support aggregate may be within a predetermined range. The diameter of the nanoparticles may be measured by photographing the nanoparticles using a transmission electron microscope (TEM). The diameter may be an average diameter. In this case, the average diameter of the nanoparticles may be calculated by dividing a sum of the diameters of the nanoparticles in the support aggregate measured in an image of the nanoparticles taken using a transmission electron microscope (TEM) by the number of the measured nanoparticles.

For example, a lower limit of the diameter of the nanoparticles may be about 2 nm, 3 nm, 4 nm, 5 nm, 6 nm, 7 nm, 8 nm, 9 nm, or 10 nm, and an upper limit thereof may be about 40 nm, 38 nm, 36 nm, 34 nm, 32 nm, 30 nm, 28 nm, 26 nm, 24 nm, 22 nm, 20 nm, 18 nm, 16 nm, 14 nm, 12 nm, or 10 nm.

The diameter of the nanoparticles may be greater than or equal to, or greater than any one lower limit among the above-described lower limits; may be less than or equal to, or less than any one upper limit among the above-described upper limits; or may have a range of greater than or equal to, or greater than any one lower limit among the above-described lower limits and less than or equal to, or less than any one upper limit among the above-described upper limits.

The support aggregate refers to a support having a structure in which a plurality of nanoparticles are aggregated, and the nanoparticles may comprise a material that may be generally used as a support.

According to an embodiment, the nanoparticle comprises a first metal oxide. The metal oxide included in the support aggregate is referred to as a "first" metal oxide, and the metal oxide included in active particles described later is referred to as a "second" metal oxide, in order to distinguish the metal oxide included in the support aggregate from the metal oxide included in the active particles. Such a notation merely helps to clearly distinguish the metal oxides included in the support aggregate and the active particles, and this order does not indicate a specific priority with respect to their characteristics.

The first metal oxide may include tungsten oxide, titanium oxide, nickel oxide, ruthenium oxide, tantalum oxide, tin oxide, cobalt oxide, or a combination thereof.

For example, the first metal oxide may include titanium dioxide (TiO₂).

The active particles fill the pores between the nanoparticles of the support aggregate, which has various shapes.

In addition, the active particles may fill the pores between the nanoparticles of the support aggregate, or may be supported on the support aggregate and permeate into an inside thereof. The active particles are supported on the support aggregate means that the active particles may be supported on at least a portion of the support aggregate, and for example, may be supported in an internal space between a plurality of nanoparticles.

As illustrated in the right-hand drawings of FIGS. 1 and 2, the active particles may fill the pores of the support aggregate in a particulate or irregular shape, or may have a structure supported on the support aggregate.

By the active particles filling the pores formed between the nanoparticles of the support aggregate or having a structure supported on the support aggregate, the active particles may have stronger bonding with the support aggregate than a form in which the active particles are simply supported, thereby improving durability of the active particles and the support aggregate.

The active particles may include a second metal oxide different from the first metal oxide. As described above, the notations of "first" and "second" in the first metal oxide and the second metal oxide are for distinguishing the metal oxides included in the support aggregate and the active particles, and do not indicate their priority.

The second metal oxide may include a noble metal oxide.

For example, the noble metal may be a non-platinum based precious metal, and for example, the non-platinum based precious metal may include palladium (Pd), ruthenium (Ru), iridium (Ir), osmium (Os), an alloy thereof, or a combination thereof.

For the alloy, for example, Ir-Fe, Ir-Ru, Ir-Os, Co-Fe, Co-Ru, Co-Os, Rh-Fe, Rh-Ru, Rh-Os, Ir-Ru-Fe, Ir-Ru-Os, Rh-Ru-Fe, Rh-Ru-Os, or a combination thereof may be used.

According to an embodiment, a noble metal oxide may include IrOₓ (wherein x is an integer of 1 to 3), RuOₓ (wherein x is an integer of 1 to 3), IrMOₓ (wherein M includes Ru, Pt, Sn, Se, Sb, Ta, Te, Nb, W, Zn, Au, or a combination thereof, and x is an integer of 1 to 3), or a combination thereof. When the active particles include the noble metal oxide as described above, stability of the catalyst for the oxygen evolution reaction of the water electrolysis cell may be improved due to the excellent stability of the support aggregate itself and the strong bonding force with the active particles.

The active particles may be included in a predetermined range based on 100 wt% of the catalyst for the oxygen evolution reaction of the water electrolysis cell to fill the pores between the nanoparticles of the support aggregate or to be supported on the support aggregate.

For example, a lower limit of a weight ratio of the active particles based on 100 wt% of the catalyst for the oxygen evolution reaction of the water electrolysis cell may be about 20 wt%, 25 wt%, 30 wt%, 35 wt%, 40 wt%, or 45 wt%, and an upper limit thereof may be about 70 wt%, 65 wt%, 60 wt%, 55 wt%, 50 wt%, or 45 wt%. The weight ratio of the active particles may be greater than or equal to, or greater than any one of the lower limits described above; may be less than or equal to, or less than any one of the upper limits described above; or may have a range of greater than or equal to, or greater than any one of the lower limits described above and less than or equal to, or less than any one of the upper limits described above. That is, a catalyst for an oxygen evolution reaction of a water electrolysis cell according to an embodiment may have improved performance such that activity of the catalyst is equal to or greater than that of the prior art even if a noble metal is used in a smaller amount compared to the prior art. Meanwhile, when the content of the active particles is less than the above range, since a structure filling the pores formed between the nanoparticles of the support aggregate may not be implemented, the active particles generally exist in a form supported on the support, and accordingly, durability may be deteriorated and activity may decrease, and when the content is greater than the above range, the reaction surface area may be reduced, thereby decreasing activity.

### 2. Method of manufacturing a catalyst for an oxygen evolution reaction of a water electrolysis cell

According to an embodiment, a method of manufacturing a catalyst for an oxygen evolution reaction of a water electrolysis cell includes aggregating nanoparticles including a first metal oxide to form a support aggregate, and filling pores between the nanoparticles of the support aggregate with active particles including a second metal oxide.

The method of manufacturing the catalyst for the oxygen evolution reaction of the water electrolysis cell may further include manufacturing the nanoparticles including the first metal oxide using a first metal oxide precursor. The manufacturing of the nanoparticles including the first metal oxide using the first metal oxide precursor may be performed before the aggregating of the nanoparticles including the first metal oxide to form the support aggregate.

A method of manufacturing nanoparticles comprising the first metal oxide is known. For example, known methods of manufacturing metal oxide nanoparticles include a wet chemical manufacturing method such as a sol-gel method, a hydrothermal synthesis method, and the like.

In an embodiment, the nanoparticles including the first metal oxide may be manufactured according to a sol-gel method. For example, the nanoparticles may be manufactured by a sol-gel method at a predetermined temperature by adding the first metal oxide precursor to a predetermined solution and mixing them, and further adding a basic compound to the mixed solution and mixing them.

The first metal oxide precursor refers to a material of a stage preceding the first metal oxide, which is a final product included in a catalyst for an oxygen evolution reaction of a water electrolysis cell.

The types of the first metal oxide are as described in "1. Catalyst for an oxygen evolution reaction of a water electrolysis cell".

The first metal oxide may be titanium dioxide (TiO₂).

Accordingly, the type of the first metal oxide precursor is not limited as long as it may produce titanium dioxide (TiO₂) as a final product.

For example, the first metal oxide precursor may be titanium alkoxide, TiCl₄, Ti(OH)₄, or Ti(SO₄)₂. Specific examples of the titanium alkoxide include titanium ethoxide, titanium butoxide, or titanium isopropoxide. A metal oxide precursor according to an embodiment may be titanium alkoxide.

A type of the solution is not limited as long as it may dissolve the metal oxide precursor. For example, the solution may include water, an alcohol, or a combination thereof. The alcohol may be methanol, ethanol, butanol, or isopropanol.

A ratio of the first metal oxide precursor mixed in the solution is not limited, but according to an embodiment, it may be included in a range of 1 ml% to 10 ml%.

The basic compound may be added to appropriately adjust a pH concentration and promote a sol-gel reaction.

The basic compound includes ammonium hydroxide, potassium hydroxide, and the like, and examples of an organic base include: primary amines such as methylamine, ethylamine, isopropylamine, and monoisopropylamine; secondary amines such as diethylamine, diisopropylamine, and dibutylamine; tertiary amines such as trimethylamine, triethylamine, triisopropylamine, and tributylamine; and alkanolamines such as tetramethylammonium hydroxide, choline, monoethanolamine, diethanolamine, 2-aminoethanol, 2-(ethylamino)ethanol, 2-(methylamino)ethanol, N-methyldiethanolamine, dimethylaminoethanol, diethylaminoethanol, nitrilotriethanol, 2-(2-aminoethoxy)ethanol, 1-amino-2-propanol, triethanolamine, monopropanolamine, and dibutanolamine.

According to an embodiment, the basic compound may be ammonium hydroxide.

A content of the basic compound may be appropriately adjusted to adjust the pH concentration and promote the sol-gel reaction. For example, the basic compound may be added in a range of 4 ml to 10 ml or 4.5 ml to 9.5 ml based on 100 ml of the first metal oxide precursor.

A sol-gel process may proceed for a predetermined time at a predetermined temperature in a mixed solution in which the basic compound is mixed with the first metal oxide precursor solution.

For example, a lower limit of the temperature may be about 50 °C, 60 °C, 70 °C, or 80 °C, and an upper limit thereof may be about 120 °C, 110 °C, 100 °C, 90 °C, or 80 °C. In addition, a lower limit of the time may be about 0.5 hours, 1 hour, 1.5 hours, or 2 hours, and an upper limit thereof may be about 3 hours, 2.5 hours, or 2 hours.

The temperature and the time may each be greater than or equal to, or greater than any one lower limit among the above-described lower limits; be less than or equal to, or less than any one upper limit among the above-described upper limits; or have a range of greater than or equal to, or greater than any one lower limit among the above-described lower limits and less than or equal to, or less than any one upper limit among the above-described upper limits.

The nanoparticles comprising the first metal oxide may be adjusted to various sizes and shapes according to a pH, a temperature, a time, and the like by the sol-gel method.

A diameter of the nanoparticles according to an embodiment may be in a predetermined range.

The lower limit and the upper limit of the diameter of the nanoparticles are as described in "1. Catalyst for an oxygen evolution reaction of a water electrolysis cell", and the range of the diameter of the nanoparticles is also as described in the section.

The support aggregate may be manufactured in various shapes as described in "1. Catalyst for an oxygen evolution reaction of a water electrolysis cell". For example, the support aggregate may be manufactured in a nanosphere or nanowire shape.

In order to be manufactured in the above shape, it may be manufactured according to a predetermined method.

According to an embodiment, forming the support aggregate by aggregating the nanoparticles comprising the first metal oxide may be dispersing the nanoparticles including the first metal oxide in a solvent and then aggregating the nanoparticles to form the support aggregate having a nanosphere shape.

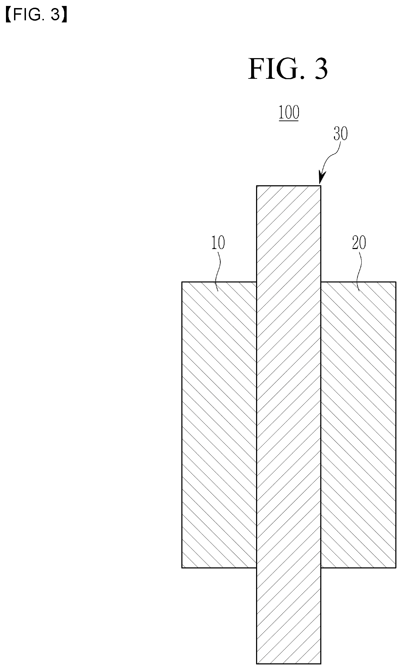

FIG. 3 is a scanning electron microscope (SEM) image of a support aggregate having a nanosphere shape manufactured by dispersing the nanoparticles including the first metal oxide in a solvent and then aggregating the nanoparticles.

According to another embodiment, forming the support aggregate by aggregating the nanoparticles comprising the first metal oxide may be filling the nanoparticles including the first metal oxide into a template to form the support aggregate having a nanowire shape.

The type of the template is not limited as long as it may form a nanowire. For example, the template may be a polycarbonate membrane, a Nylon membrane, a Cellulose membrane, or an AAO membrane (anodic aluminum oxide membrane) having a cylindrical shape.

According to an embodiment, the template may be an AAO membrane (anodic aluminum oxide membrane).

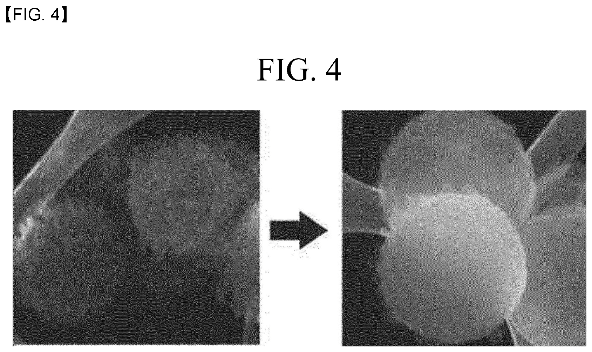

FIG. 4 is a scanning electron microscope (SEM) image of a support aggregate having a nanowire shape, manufactured by filling an anodic aluminum oxide membrane with nanoparticles comprising the first metal oxide.

In addition, according to an embodiment, a method of manufacturing a catalyst for an oxygen evolution reaction of a water electrolysis cell may perform a heat treatment process on the support aggregate after forming the support aggregate by aggregating the nanoparticles including the first metal oxide, and before filling the pores between the nanoparticles of the support aggregate with active particles including a second metal oxide. The heat treatment process performed on the support aggregate before filling the pores between the nanoparticles with active particles including a second metal oxide is referred to as a "first heat treatment process". The first heat treatment process is for distinguishing from a heat treatment process to be described later performed to fill the pores between the nanoparticles of the support aggregate with active particles including a second metal oxide, and does not indicate a priority between heat treatment processes.

The first heat treatment process may be performed regardless of the shape of the support aggregate. That is, it may be performed both when the shape of the support aggregate is a nanosphere and when it is a nanowire.

The support aggregate after performing the first heat treatment process may have a crystal phase of anatase, rutile, brookite, or a mixture thereof.

The first heat treatment process may be performed at a temperature within a predetermined range.

A lower limit of the first heat treatment temperature may be about 200°C, 250°C, 300°C, 350°C, 400°C, or 500°C, and an upper limit thereof may be about 800°C, 750°C, 700°C, 650°C, 600°C, 550°C, or 500°C. The heat treatment temperature may be greater than or equal to, or greater than any one lower limit among the above-described lower limits; may be less than or equal to, or less than any one upper limit among the above-described upper limits; or may have a range of greater than or equal to, or greater than any one lower limit among the above-described lower limits and less than or equal to, or less than any one upper limit among the above-described upper limits.

As the first heat treatment process is performed at a temperature and a time within the above-described ranges, the support aggregate having an anatase, rutile, brookite, or mixed crystal phase thereof may be formed as described above.

When the support aggregate has the nanowire shape, a vacuum adsorption process may be performed before the first heat treatment process. The vacuum adsorption process performed before the first heat treatment process is referred to as a "first vacuum adsorption process". The first vacuum adsorption process is to distinguish it from a vacuum adsorption process performed to fill the pores between the nanoparticles of the support aggregate to be described later with the active particles including the second metal oxide, and does not indicate a priority among the vacuum adsorption processes.

The first vacuum adsorption process may be performed by appropriately adjusting a time and a pressure as needed. According to an embodiment, a progress time and a pressure of the first vacuum adsorption may be in a predetermined range.

A lower limit of the time of the first vacuum adsorption process may be about 10 minutes, 15 minutes, 20 minutes, 25 minutes, or 30 minutes, and an upper limit thereof may be about 90 minutes, 80 minutes, 70 minutes, 60 minutes, 50 minutes, 40 minutes, or 30 minutes.

A lower limit of the pressure of the first vacuum adsorption process may be about 5 kPa, 6 kPa, 7 kPa, 8 kPa, 9 kPa, or 10 kPa, and an upper limit thereof may be about 20 kPa, 18 kPa, 16 kPa, 14 kPa, 12 kPa, or 10 kPa.

The time and the pressure of the first vacuum adsorption process may each be greater than or equal to, or greater than any one lower limit among the described lower limits; less than or equal to, or less than any one upper limit among the described upper limits; or have a range greater than or equal to, or greater than any one lower limit among the described lower limits, and less than or equal to, or less than any one upper limit among the described upper limits.

By manufacturing the support aggregate having various shapes as described above, pores into which the active particles may penetrate are increased, thereby improving durability of the support aggregate and the active particles.

According to an embodiment, filling pores between the nanoparticles of the support aggregate with active particles including a second metal oxide may comprise mixing an active particle precursor and a weak reducing agent into a solution containing the support aggregate to obtain a precursor solution, performing a vacuum adsorption process (hereinafter, a "second vacuum adsorption process") on the precursor solution to adsorb the active particle precursor into the pores between the nanoparticles of the support aggregate, and performing a heat treatment process (hereinafter, a "second heat treatment process") on the precursor solution on which the vacuum adsorption process has been performed.

The active particle precursor refers to a material of a stage preceding the active particles, which are a final product.

The active particle precursor may include a noble metal chloride, a noble metal acetate, a noble metal aminate, or a combination thereof. According to an embodiment, an active particle precursor may be a noble metal chloride, for example, IrCl₄.

The weak reducing agent may include formaldehyde, formic acid, oxalic acid, ascorbic acid, citric acid, urea, ethylenediamine, hexamethylenetetramine, or a combination thereof.

A weight ratio of the active particle precursor to the weak reducing agent included in the precursor solution may be in a range of 1:1 to 1:10.

The second vacuum adsorption process refers to a process of lowering air pressure to create a vacuum state to adsorb a material.

The second vacuum adsorption may be performed by appropriately adjusting a time and a pressure as needed. According to an embodiment, a processing time and a pressure of the second vacuum adsorption may be within a predetermined range.

For example, a lower limit of the time may be about 5 minutes, 10 minutes, 15 minutes, or 20 minutes, and an upper limit thereof may be about 60 minutes, 50 minutes, 40 minutes, 30 minutes, or 20 minutes. A lower limit of the pressure may be about 5 kPa, 6 kPa, 7 kPa, 8 kPa, 9 kPa, or 10 kPa, and an upper limit thereof may be about 20 kPa, 18 kPa, 16 kPa, 14 kPa, 12 kPa, or 10 kPa.

The time and the pressure of the second vacuum adsorption process may each be greater than or equal to, or greater than any one lower limit among the above-described lower limits; may be less than or equal to, or less than any one upper limit among the above-described upper limits; or may have a range of greater than or equal to, or greater than any one lower limit among the above-described lower limits and less than or equal to, or less than any one upper limit among the above-described upper limits.

The second heat treatment process may be performed on the precursor solution on which the second vacuum adsorption process has been performed. Through the heat treatment process, the active particles may be formed and stabilized through an interaction among the active particle precursor, the weak reducing agent, and the support aggregate, and the formation of the catalyst for the oxygen evolution reaction of the water electrolysis cell may be induced at an appropriate rate depending on the heat treatment temperature.

The second heat treatment process may be performed at a predetermined temperature for a predetermined time.

For example, a lower limit of the temperature of the second heat treatment process may be about 80°C, 85°C, 90°C, or 100°C, and an upper limit thereof may be about 140°C, 130°C, 120°C, 110°C, or 100°C.

In addition, a lower limit of the second heat treatment time may be about 1 hour, 1.5 hours, or 2 hours, and an upper limit thereof may be about 4 hours, 3 hours, or 2 hours.

The second heat treatment temperature and time may each be greater than or equal to, or greater than any one lower limit among the above-described lower limits; may be less than or equal to, or less than any one upper limit among the above-described upper limits; or may have a range of greater than or equal to, or greater than any one lower limit among the above-described lower limits and less than or equal to, or less than any one upper limit among the above-described upper limits.

### 3. Membrane-electrode assembly for a water electrolysis cell

According to an embodiment, a membrane-electrode assembly for a water electrolysis cell includes a polymer electrolyte membrane, an oxygen evolution electrode positioned on one surface of the polymer electrolyte membrane, and a hydrogen evolution electrode positioned on another surface of the polymer electrolyte membrane.

The membrane-electrode assembly for a water electrolysis cell is illustrated in FIG. 3. The membrane-electrode assembly for a water electrolysis cell (100) according to FIG. 3 includes a polymer electrolyte membrane (30); an oxygen evolution electrode (10) positioned on one surface of the polymer electrolyte membrane; and a hydrogen evolution electrode (20) positioned on the other surface of the polymer electrolyte membrane.

The membrane-electrode assembly for the water electrolysis cell may have excellent durability by including the above-described catalyst for the oxygen evolution reaction.

For example, durability of the membrane-electrode assembly may be represented by a voltage increase rate. The voltage increase rate represented by Equation 1 below of the membrane-electrode assembly comprising the catalyst for the oxygen evolution reaction may be within a predetermined range. A specific method of measuring the voltage increase rate follows the method described in "Durability Evaluation" of Evaluation Example 3 of the present specification. [Equation 1] 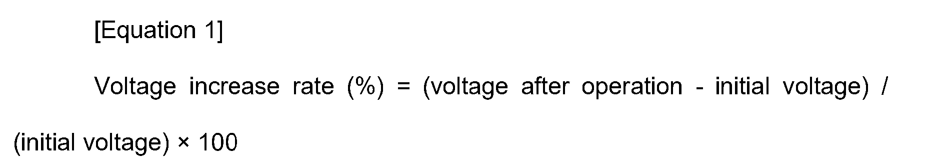 Voltage increase rate (%) = (voltage after operation - initial voltage)/ (initial voltage) × 100

A lower limit of the voltage increase rate may be about 0.5%, 0.6%, 0.7%, 0.8%, 0.9%, 1%, 1.1%, 1.2%, 1.3%, 1.4%, 1.5%, 1.6%, or 1.7%, and an upper limit thereof may be about 3%, 2.5%, 2%, 1.9%, 1.8%, 1.7%, 1.6%, 1.5%, 1.4%, or 1.3%.

The voltage increase rate of the membrane-electrode assembly may be less than or equal to, or less than any one of the above-described upper limits; or may be a range of greater than or equal to, or greater than any one of the above-described lower limits and less than or equal to, or less than any one of the above-described upper limits.

Hereinafter, the oxygen evolution electrode, the hydrogen evolution electrode, and the polymer electrolyte membrane will be described in detail.

The oxygen evolution electrode refers to an electrode in which an oxygen evolution reaction (OER) occurs.

The oxygen evolution electrode comprises the catalyst for the oxygen evolution reaction of the water electrolysis cell.

The catalyst for the oxygen evolution reaction of the water electrolysis cell is the same as described in the "1. Catalyst for an oxygen evolution reaction of a water electrolysis cell".

The oxygen evolution electrode may include the catalyst for the oxygen evolution reaction in a predetermined range based on 100 wt% of the oxygen evolution electrode.

For example, a lower limit of the amount of the catalyst for the oxygen evolution reaction may be about 65 wt% or 67 wt%, and an upper limit thereof may be about 90 wt% or 95 wt%.

The amount of the catalyst for the oxygen evolution reaction may be greater than or equal to, or greater than any one of the above-described lower limits; less than or equal to, or less than any one of the above-described upper limits; or may be a range of greater than or equal to, or greater than any one of the above-described lower limits and less than or equal to, or less than any one of the above-described upper limits.

The oxygen evolution electrode may further comprise an ion conductor to improve adhesion of the catalyst and to facilitate hydrogen ions transfer.

The ion conductor may include a cation exchange group to secure ion conductivity.

The cation exchange group may be a sulfonic acid group, a carboxyl group, a boronic acid group, a phosphoric acid group, a phosphonic acid group, an imide group, a sulfonimide group, a sulfonamide group, or a sulfonic acid fluoride.

The ion conductor may be a fluorine-based ion conductor, a hydrocarbon-based ion conductor, or a mixture thereof.

The fluorine-based ion conductor may be a fluorine-based polymer having the cation exchange group in a side chain and containing fluorine in a main chain, for example, poly(perfluorosulfonic acid), poly(perfluorocarboxylic acid), or the like.

The hydrocarbon-based ion conductor may be a hydrocarbon-based polymer having the cation exchange group in a side chain [for example, sulfonated polyimide (S-PI), sulfonated polyarylethersulfone (S-PAES), sulfonated polyetheretherketone (SPEEK), sulfonated polybenzimidazole (SPBI), sulfonated polysulfone (S-PSU), sulfonated polystyrene (S-PS), sulfonated polyphosphazene, sulfonated polyquinoxaline, sulfonated polyketone, sulfonated polyphenylene oxide, sulfonated polyether sulfone, sulfonated polyether ketone, sulfonated polyphenylene sulfone, sulfonated polyphenylene sulfide, sulfonated polyphenylene sulfide sulfone, sulfonated polyphenylene sulfide sulfone nitrile, sulfonated polyarylene ether, sulfonated polyarylene ether nitrile, sulfonated polyarylene ether ether nitrile, sulfonated polyarylene ether sulfone ketone, or the like].

The ion conductor according to an embodiment may have hydrogen ion conductivity.

In the ion conductor having hydrogen ion conductivity, H in the cation exchange group at a terminal of the side chain may be substituted with Na, K, Li, Cs, or tetrabutylammonium. In the case of substituting H with Na in the ion exchange group at the terminal of the side chain, substitution is performed using NaOH when preparing a catalyst composition, and in the case of substituting with tetrabutylammonium, substitution is performed using tetrabutylammonium hydroxide, and K, Li, or Cs may also be substituted using an appropriate compound. Since this substitution method is widely known in the art, a detailed description thereof will be omitted in the present specification.

The content of the ion conductor may be appropriately adjusted as necessary, and in an example, a lower limit of the content of the ion conductor may be about 65 parts by weight or 68 parts by weight, and an upper limit thereof may be about 95 parts by weight or 90 parts by weight, based on 100 parts by weight of the catalyst for an oxygen evolution reaction.

The ion conductor may have a content, based on 100 parts by weight of the catalyst for the oxygen evolution reaction, a range of greater than or equal to, or greater than any one lower limit among the described lower limits; less than or equal to, or less than any one upper limit among the described upper limits; or greater than or equal to, or greater than any one lower limit among the described lower limits and less than or equal to, or less than any one upper limit among the described upper limits. When the ion conductor is contained within the range, the performance and durability are excellent.

The ion conductor may be used in the form of a single material or a mixture, and may also be optionally used together with a non-conductive compound for the purpose of further improving adhesion with the polymer electrolyte membrane. A content of the non-conductive compound may be appropriately adjusted according to the purpose of use.

As the non-conductive compound, at least one selected from polytetrafluoroethylene (PTFE), a tetrafluoroethylene-hexafluoropropylene copolymer (FEP), a tetrafluoroethylene-perfluoroalkyl vinyl ether copolymer (PFA), ethylene/tetrafluoroethylene (ETFE), an ethylene chlorotrifluoro-ethylene copolymer (ECTFE), polyvinylidene fluoride, a copolymer of polyvinylidene fluoride-hexafluoropropylene (PVdF-HFP), dodecylbenzenesulfonic acid, and sorbitol may be used.

The hydrogen evolution electrode refers to an electrode in which a hydrogen evolution reaction (HER) occurs.

The hydrogen evolution electrode may include a catalyst for a hydrogen evolution reaction. The catalyst for the hydrogen evolution reaction may include active particles and a support.

The active particles may include a noble metal.

For example, the noble metal may be a platinum-based noble metal.

As the platinum-based noble metal (platinum based precious metal), platinum (Pt) and/or a Pt-M alloy may be used. The M may be palladium (Pd), ruthenium (Ru), iridium (Ir), osmium (Os), gallium (Ga), titanium (Ti), vanadium (V), chromium (Cr), manganese (Mn), iron (Fe), cobalt (Co), nickel (Ni), copper (Cu), silver (Ag), gold (Au), zinc (Zn), tin (Sn), molybdenum (Mo), tungsten (W), lanthanum (La), or rhodium (Rh).

Specifically, as the Pt-M alloy, Pt-Pd, Pt-Sn, Pt-Mo, Pt-Cr, Pt-W, Pt-Ru, Pt-Ni, Pt-Co, Pt-Y, Pt-Ru-W, Pt-Ru-Ni, Pt-Ru-Mo, Pt-Ru-Rh-Ni, Pt-Ru-Sn-W, Pt-Ru-Ir-Ni, Pt-Co-Mn, Pt-Co-Ni, Pt-Co-Fe, Pt-Co-Ir, Pt-Co-S, Pt-Co-P, Pt-Fe, Pt-Fe-Ir, Pt-Fe-S, Pt-Fe-P, Pt-Au-Co, Pt-Au-Fe, Pt-Au-Ni, Pt-Ni, Pt-Ni-Ir, Pt-Cr, Pt-Cr-Ir, or a mixture thereof may be used.

The support may be a carbon-based support.

The carbon-based support may be graphite, super P, a carbon fiber, a carbon sheet, carbon black, Ketjen black, Denka black, acetylene black, a carbon nano tube (CNT), a carbon sphere, a carbon ribbon, fullerene, activated carbon, a carbon nanofiber, a carbon nanowire, a carbon nanoball, a carbon nanohorn, a carbon nanocage, a carbon nanoring, an ordered nano-/meso-porous carbon, a carbon aerogel, mesoporous carbon, graphene, stabilized carbon, activated carbon, or a combination thereof.

The oxygen evolution electrode and the hydrogen evolution electrode may each comprise only a catalyst layer comprising the catalyst for an oxygen evolution reaction and the catalyst for a hydrogen evolution reaction, but may comprise an electrode substrate together with the catalyst layer.

In this case, the electrode substrate may serve to support the electrode while diffusing a fuel and an oxidant to the catalyst layer.

The electrode substrate may include a microporous layer, a porous diffusion layer, or a combination thereof.

The microporous layer may serve to enhance a reactant diffusion effect, and may generally include a conductive powder having a small particle diameter, for example, a carbon powder, carbon black, acetylene black, activated carbon, a metal oxide nanowire, a carbon fiber, fullerene, a carbon nanotube, a carbon nanowire, a carbon nano-horn, or a carbon nano ring.

The porous diffusion layer includes porous Titnia, carbon paper, carbon cloth, carbon felt, or a metal cloth (referring to a porous film consisting of a metal cloth in a fibrous state, or a metal film formed on a surface of a cloth formed of polymer fibers).

The microporous layer and the porous diffusion layer may also include known ones in addition to those exemplified above.

The electrode substrate may be one treated with a fluorine-based resin to be water-repellent; in this case, a decrease in reactant diffusion efficiency due to water generated during operation of the water electrolysis cell may be prevented.

As the fluorine-based resin, polytetrafluoroethylene, polyvinylidene fluoride, polyhexafluoropropylene, polyperfluoroalkyl vinyl ether, polyperfluorosulfonyl fluoride, alkoxyvinyl ether, fluorinated ethylene propylene, polychlorotrifluoroethylene, or a copolymer thereof may be used.

The electrode substrate may improve conductivity by using platinum or the like and prevent corrosion of the porous diffusion layer by the ion conductor, thereby preventing a decrease in water electrolysis performance.

The polymer electrolyte membrane has an ion exchange function of transporting hydrogen ions generated in the oxygen evolution electrode to the catalyst for the hydrogen evolution reaction.

A polymer electrolyte membrane according to an embodiment may include a porous support including a plurality of pores, and an ion conductor filling the pores of the porous support.

The porous support may be a fluorine-based support or a nanoweb support.

The fluorine-based support may correspond to, for example, expanded polytetrafluoroethylene (e-PTFE) having a microstructure of polymer fibrils or a microstructure in which nodes are connected to each other by fibrils.

The nanoweb support may be a support in which nanofibers are integrated in a form of a nonwoven fabric including a plurality of pores.

The ion conductor is as described above.

The ion conductor included in the polymer electrolyte membrane may be the same as or different from the ion conductor included in the oxygen evolution electrode, and for example, the ion conductor included in the polymer electrolyte membrane may be the same as the ion conductor included in the oxygen evolution electrode.

### 4. Water electrolysis cell

In an embodiment, a water electrolysis cell comprises the membrane-electrode assembly for the water electrolysis cell.

The water electrolysis cell is identical to a known cell except for comprising the membrane-electrode assembly according to the present application, so a detailed description thereof will be omitted.

### [Mode for Invention]

Hereinafter, embodiments of the present disclosure will be described in detail so that those of ordinary skill in the art to which the present disclosure pertains may easily implement them. However, the present disclosure may be implemented in various different forms and is not limited to the embodiments described herein.

### Preparation Example 1. Preparation of a nanoparticle solution

As a solution, 100 ml of a mixed solution in which ethanol and water (H₂O) are mixed at a ratio of 1:1 (=ethanol:water), respectively, was placed in a reaction vessel, and as a first metal oxide precursor, 3 ml of Ti-butoxide manufactured by Sigma-Aldrich was added to prepare a first mixture.

To the first mixture, 0.2 ml of 0.2M ammonium hydroxide (NH₄OH) from Sigma-Aldrich was added as a basic compound to adjust a pH concentration to prepare a second mixture.

A plurality of nanoparticles including TiO₂ were formed from the second mixture according to a sol-gel process at 80 °C for 2 hours.

At this time, the average diameter of the nanoparticles was measured to be 10 nm based on images obtained using a transmission electron microscope (TEM).

### Preparation Example 2-1. Preparation of a support aggregate having a nanosphere shape

The solution according to Preparation Example 1 was dried at 80 °C for 3 hours, dispersed in 100 ml of a mixed solution in which ethanol and water (H₂O) were mixed at a ratio of 2:1 (=ethanol:water), respectively, and then dried at 70 °C for 2 hours. Thereafter, a first heat treatment process was performed at 500 °C and under air for 1 hour to prepare a support aggregate having a nanosphere shape as shown in the left scanning electron microscope (SEM) image of FIG. 4.

At this time, a BET specific surface area of the support aggregate was about 202 m²/g.

### Preparation Example 2-2. Preparation of a support aggregate having a nanowire shape

The solution according to Preparation Example 1 was filled into an anodic aluminum oxide membrane (Whatman, Anodisc), subjected to a first vacuum adsorption process under a pressure of 10 kPa for 30 minutes, and dried.

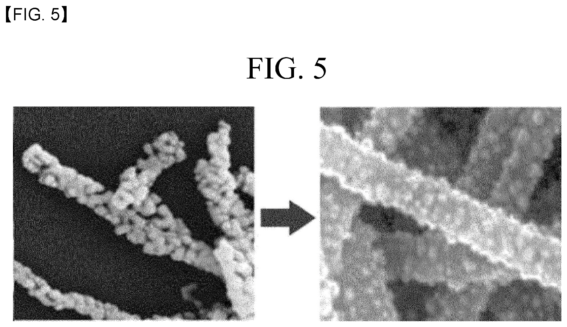

Thereafter, after performing a first heat treatment at 500 °C and under air for 1 hour, the Anodic Aluminum Oxide membrane was removed, and accordingly, a support aggregate having a nanowire shape was prepared as shown in the left scanning electron microscope (SEM) image of FIG. 5.

At this time, the BET specific surface area of the support aggregate was about 235 m²/g.

### Example 1

After putting 1.0 g of the support aggregate formed according to Preparation Example 2-1 into a reaction vessel, a precursor solution was prepared by adding IrCl4 from Sigma-Aldrich as an active particle precursor and oxalic acid from Sigma-Aldrich as a weak reducing agent to a mixed solution in which ethanol and water (H₂O) were mixed at a ratio of 1:1.

A second vacuum adsorption process was performed on the precursor solution at a pressure of 10 kPa in a vacuum for 20 minutes, whereby the active particle precursor filled the pores of the support aggregate, or was supported on the support aggregate, and permeated into the interior to be adsorbed.

In addition, the precursor solution subjected to the vacuum adsorption process was subjected to a second heat treatment at 100 °C for 2 hours to prepare a catalyst for an oxygen evolution reaction of a water electrolysis cell, wherein IrOₓ was formed on the support aggregate.

Based on 100 wt% of the catalyst for the oxygen evolution reaction of the water electrolysis cell, a content of the active particles was about 45 wt%.

The image on the right of FIG. 4 shows a scanning electron microscope (SEM) image of a catalyst for an oxygen evolution reaction, which is formed by IrOx filling the pores of the support aggregate, or being supported on the support aggregate and permeating into the interior thereof.

As shown in the right image of FIG. 4, the catalyst for the oxygen evolution reaction of the water electrolysis cell prepared in Example 1 has a nanosphere shape identical to the shape of the support aggregate, and as a result of measuring a diameter in a image obtained by photographing the catalyst for the oxygen evolution reaction using a scanning electron microscope (SEM), the diameter of the catalyst for the oxygen evolution reaction was about 150 nm.

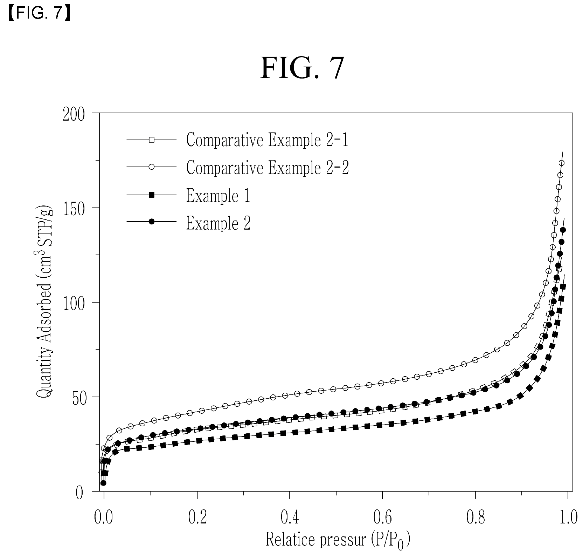

As shown in the result of FIG. 7, the BET specific surface area of the catalyst for the oxygen evolution reaction of the water electrolysis cell was about 105 m²/g. Considering that the BET specific surface area of the support aggregate manufactured according to Preparation Example 2-1 is about 202 m²/g, it may be confirmed that the active particles fill the pores of the support aggregate.

### Example 2

A catalyst for an oxygen evolution reaction was manufactured in the same manner as in Example 1, except that the support aggregate formed according to Preparation Example 2-2 was applied.

The content of the active particles was about 45 wt% based on 100 wt% of the catalyst for the oxygen evolution reaction of the water electrolysis cell.

The right image of FIG. 5 shows a scanning electron microscope (SEM) image of the catalyst for the oxygen evolution reaction formed by IrOx filling the pores of the support aggregate or being supported on the support aggregate and penetrating into an inside thereof.

As shown in the right image of FIG. 5, the catalyst for the oxygen evolution reaction of the water electrolysis cell manufactured in Example 2 has a nanowire shape identical to that of the support aggregate. When measuring the diameter and the height from an image obtained by photographing the catalyst for the oxygen evolution reaction using a scanning electron microscope (SEM) for the diameter (wᵣ) and the height (wₗ) of the catalyst, and calculating a ratio (wᵣ/wₗ) of the diameter (wᵣ) to the length (wₗ), it was about 0.25.

As in the result of FIG. 7, the BET specific surface area of the catalyst for the oxygen evolution reaction of the water electrolysis cell was about 138 m²/g. Considering that the BET specific surface area of the support aggregate manufactured according to Preparation Example 2-2 is about 235 m²/g, it can be confirmed that the active particles fill the pores of the support aggregate.

### Comparative Example 1

As a catalyst for an oxygen evolution reaction, only a commercial IrO₂ (Alfa Aesar, 43396) catalyst was used without including a support aggregate.

### Comparative Example 2

A precursor solution was prepared by dissolving IrCl₄ as an active particle precursor in a mixed solution in which iso-propanol and 37% hydrochloric acid (HCl) were mixed at a ratio of 1:1 (= iso-propanol:hydrochloric acid).

The precursor solution was repeatedly coated on an AAO membrane (Anodic Aluminum Oxide membrane) to grow IrO₂, thereby manufacturing a catalyst having a nanowire shape.

### Comparative Example 3

As the catalyst for the oxygen evolution reaction, a commercial IrO₂/TiO₂ catalyst from Heraeus supported on a support was used.

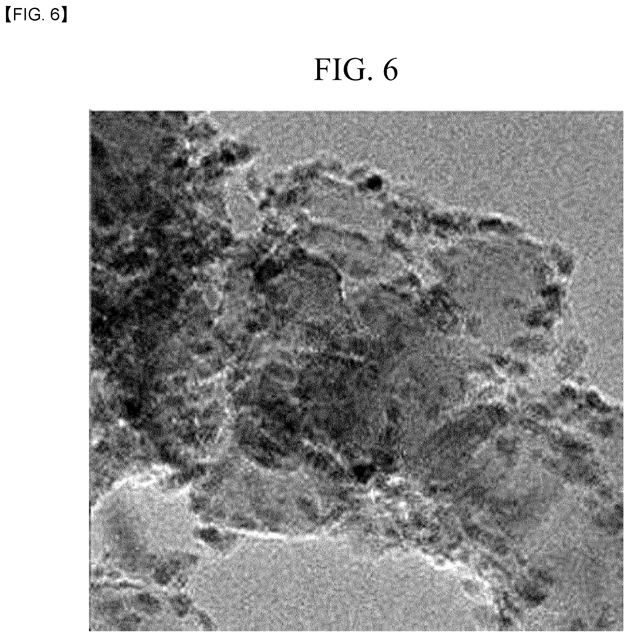

A transmission electron microscope (TEM) image of the catalyst for the oxygen evolution reaction is illustrated in FIG. 6. According to FIG. 7, the catalyst for the oxygen evolution reaction includes active particles and a support supporting the active particles, and unlike Examples 1 and 2, the support does not have a nanosphere or nanowire shape.

The BET specific surface area of the catalyst for the oxygen evolution reaction was about 105 m²/g.

### Evaluation Example 1. BET specific surface area analysis

The BET specific surface areas of the support aggregates manufactured in Preparation Examples 2-1 and 2-2, and the catalysts for the oxygen evolution reaction manufactured in Examples 1 and 2, which comprises the support aggregates of Preparation Examples 2-1 and 2-2, were measured according to a nitrogen adsorption experiment method.

The nitrogen adsorption measurement was performed using a static volumetric apparatus (Micromeritics, ASAP-2020) at a temperature of 77 K, and the results are shown in FIG. 7.

### Evaluation Example 2. I-V characteristics

An electrode slurry was prepared by adding 20 parts by weight of an ion conductor dispersion and a solvent based on 100 parts by weight of the catalysts for the oxygen evolution reaction of the water electrolysis cell manufactured in Examples 1 and 2 and Comparative Examples 1 to 3, and the electrode slurry was directly coated on a polymer electrolyte membrane (Chemours, NR212) and then dried at 90 °C for 30 minutes to manufacture a membrane-electrode assembly for a water electrolysis cell.

The manufactured membrane-electrode assembly for a water electrolysis cell was applied inside a unit cell designed and manufactured for a water electrolysis cell, and measurement was performed by applying a protocol measuring a voltage and a resistance at a specific current from 1 mA to 20 A under conditions of a cell temperature of 80 °C, a water temperature of 80 °C, and a flow rate of 5 ml/min, and the measurement was stopped at 2 V.

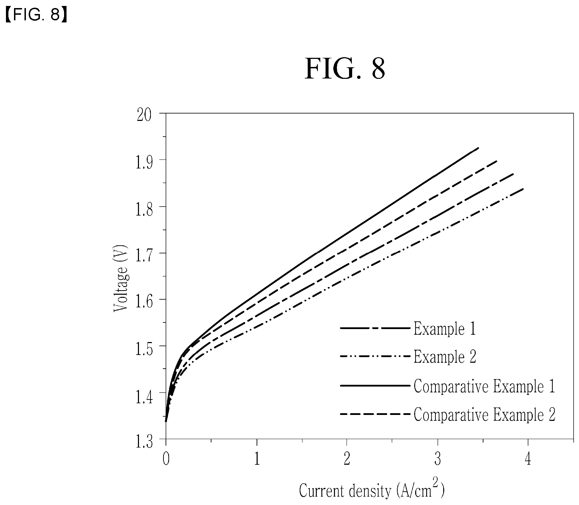

The results at this time are as shown in FIG. 8.

### Evaluation Example 3. Durability evaluation

A membrane-electrode assembly was manufactured in the same manner as the method in Evaluation Example 1, the manufactured membrane-electrode assembly was applied inside a unit cell designed and manufactured for a water electrolysis cell, and then a voltage increase rate was measured after operating a constant current for 500 hours at a cell temperature of 80 °C and a current density of 1 A/cm².

The voltage increase rate was measured using a Potentiostat device of BioLogic, and was calculated according to Equation 1 below. The results are as shown in Table 1 below. [Equation 1] 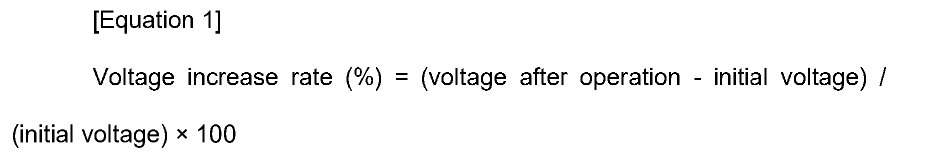 Voltage increase rate (%) = (voltage after operation - initial voltage)/ (initial voltage) × 100

**[Table 1]**

| | Voltage increase rate (%) |
|---|---|
| Example 1 | 1.7 |
| Example 2 | 1.3 |
| Comparative Example 1 | 7.8 |
| Comparative Example 2 | 6.3 |
| Comparative Example 3 | 3.5 |

### Results

Referring to the graph of FIG. 7, specific surface areas of the catalysts for the oxygen evolution reaction manufactured according to Examples 1 and 2 including the support aggregates manufactured according to Preparation Examples 2-1 and 2-2 decrease compared to specific surface areas of the support aggregates manufactured according to Preparation Examples 2-1 and 2-2. Through this, it may be confirmed that in the catalysts for the oxygen evolution reaction manufactured according to Examples 1 and 2, the active particles fill the pores of the support aggregates or are supported on the support aggregates while penetrating into an inside thereof.

Referring to the graph of FIG. 8, it may be confirmed that the membrane-electrode assemblies comprising the catalysts for the oxygen evolution reaction of the water electrolysis cell of Examples 1 and 2, which comprise support aggregates having a nanosphere or nanowire shape, exhibit higher current densities at the same voltage compared to the membrane-electrode assemblies comprising the catalysts for the oxygen evolution reaction of the water electrolysis cell of Comparative Examples 1 and 2 that do not comprise a support, thereby confirming improved performance.

According to the durability evaluation, it may be confirmed that the membrane-electrode assemblies comprising the catalysts for the oxygen evolution reaction of the water electrolysis cell of Examples 1 and 2, which comprise support aggregates having a nanosphere or nanowire shape, exhibit decreased voltage increase rates compared to the membrane-electrode assemblies comprising the catalysts for the oxygen evolution reaction of the water electrolysis cell of Comparative Examples 1 and 2 that do not comprise a support, thereby confirming increased durability. In addition, it may be confirmed that the membrane-electrode assemblies comprising the catalysts for the oxygen evolution reaction of the water electrolysis cell of Examples 1 and 2, which comprise support aggregates having a nanosphere or nanowire shape, exhibit decreased voltage increase rates compared to the membrane-electrode assembly of Comparative Example 3, which uses a commercial IrO₂/TiO₂ catalyst from Heraeus supported on a support, unlike the support aggregates having a nanosphere or nanowire shape, thereby confirming increased durability.

Although preferred embodiments of the present disclosure have been described in detail above, the scope of the present disclosure is not limited thereto, and various modifications and improvements made by those skilled in the art using the basic concepts of the present disclosure defined in the following claims also fall within the scope of the present disclosure.

### <Description of symbols>

1: nanoparticles
2: active particles
A: support aggregate having a nanosphere shape
A^{'}: catalyst for an oxygen evolution reaction including a support aggregate having a nanosphere shape
B: support aggregate having a nanowire shape
B^{'}: catalyst for an oxygen evolution reaction including a support aggregate having a nanowire shape
100: membrane-electrode assembly for a water electrolysis cell
10: oxygen evolution electrode
20: hydrogen evolution electrode
30: polymer electrolyte membrane

## Claims

1. A catalyst for an oxygen evolution reaction of a water electrolysis cell comprising:
a support aggregate in which a plurality of nanoparticles are aggregated; and
active particles filling pores between the nanoparticles of the support aggregate or supported on the support aggregate,
wherein the nanoparticles comprise a first metal oxide, and
the active particles comprise a second metal oxide different from the first metal oxide.

2. The catalyst for the oxygen evolution reaction of the water electrolysis cell of claim 1, wherein
a BET specific surface area of the support aggregate is in a range of 100 m²/g to 300 m²/g.

3. The catalyst for the oxygen evolution reaction of the water electrolysis cell of claim 1, wherein
the support aggregate has a nanosphere or nanowire shape.

4. The catalyst for the oxygen evolution reaction of the water electrolysis cell of claim 3, wherein
when the support aggregate has the nanosphere shape,
the catalyst for the oxygen evolution reaction of the water electrolysis cell also has the nanosphere shape, and
a diameter of the catalyst is in a range of 40 nm to 400 nm.

5. The catalyst for the oxygen evoₗution reaction of the water eₗectrolysis cell of claim 3, wherein
when the support aggregate has the nanowire shape,
the catalyst for the oxygen evoₗution reaction of the water electrolysis cell also has the nanowire shape, and
a ratio (wᵣ/wₗ) of a diameter (wᵣ) to a length (wₗ) of the catalyst is in a range of 0.05 to 0.9.

6. The catalyst for the oxygen evolution reaction of the water electrolysis cell of claim 1, wherein
a diameter of the nanoparticles is in a range of 2 nm to 40 nm.

7. The catalyst for the oxygen evolution reaction of the water electrolysis cell of claim 1, wherein
the first metal oxide comprises titanium dioxide (TiO₂).

8. The catalyst for the oₓygen evolution reaction of the water electrolysis cell of claim 1, wherein
the second metal oxide comprises a noble metal oₓide, and
the noble metal oxide comprises IrOₓ (wherein x is an integer of 1 to 3), RuOₓ (wherein x is an integer of 1 to 3), IrMOₓ (wherein M includes Ru, Pt, Sn, Se, Sb, Ta, Te, Nb, W, Zn, Au, or a combination thereof, and x is an integer of 1 to 3), or a combination thereof.

9. The catalyst for an oxygen evolution reaction for a water electrolysis cell of claim 1, wherein
the active particles are present in a range of 20 wt% to 70 wt% based on 100 wt% of the catalyst for the oxygen evolution reaction.

10. A method of manufacturing a catalyst for an oxygen evolution reaction of a water electrolysis cell comprising:
aggregating nanoparticles comprising a first metal oxide to form a support aggregate; and
filling pores between the nanoparticles of the support aggregate with active particles comprising a second metal oxide.

11. The method of manufacturing the catalyst for the oxygen evolution reaction of the water electrolysis cell of claim 10, further comprising:
manufacturing the nanoparticles comprising the first metal oxide using a first metal oxide precursor, wherein
the first metal oxide precursor comprises titanium alkoxide, TiCl₄, Ti(OH)₄, Ti(SO₄)₂, or a combination thereof.

12. The method of manufacturing the catalyst for the oxygen evolution reaction of the water electrolysis cell of claim 11, wherein
forming the support aggregate by aggregating the nanoparticles comprising the first metal oxide comprises:
forming the support aggregate having a nanosphere shape by dispersing the nanoparticles comprising the first metal oxide in a solvent and then aggregating the nanoparticles; or
forming the support aggregate having a nanowire shape by filling the nanoparticles comprising the first metal oxide into a template.

13. The method of manufacturing the catalyst for the oxygen evolution reaction of the water electrolysis cell of claim 10, wherein
filling the pores between the nanoparticles of the support aggregate with the active particles comprising the second metal oxide comprises:
obtaining a precursor solution by mixing an active particle precursor and a weak reducing agent in a solution comprising the support aggregate such that a weight ratio is in a range of 1:1 to 1:10,
adsorbing the active particle precursor into the pores between the nanoparticles of the support aggregate by performing a vacuum adsorption process on the precursor solution, and
performing a heat treatment process on the precursor solution after performing the vacuum adsorption process, wherein
the active particle precursor comprises a noble metal chloride, a noble metal acetate, a noble metal aminate, or a combination thereof, and
the weak reducing agent comprises formaldehyde, formic acid, oxalic acid, ascorbic acid, citric acid, urea, ethylenediamine, hexamethylenetetramine, or a mixture thereof.

14. The method of manufacturing the catalyst for the oxygen evolution reaction of the water electrolysis cell of claim 13, wherein
the vacuum adsorption is performed at 5 kPa to 20 kPa.

15. The method of manufacturing the catalyst for the oxygen evolution reaction of the water electrolysis cell of claim 13, wherein
the heat treatment process is performed at a temperature of 80 °C to 140 °C for 1 hour to 4 hours.

16. A membrane-electrode assembly for a water electrolysis cell comprising:
a polymer electrolyte membrane;
an oxygen evolution electrode positioned on one surface of the polymer electrolyte membrane, and comprising the catalyst for the oxygen evolution reaction of the water electrolysis cell of claim 1 and an ion conductor; and
a hydrogen evolution electrode positioned on the other surface of the polymer electrolyte membrane, and comprising a carbon-based support, and active particles supported on the carbon-based support and comprising a noble metal.

17. The membrane-electrode assembly for the water electrolysis cell of claim 16, wherein
a voltage increase rate represented by Equation 1 below is less than or equal to 3%: [Equation 1] 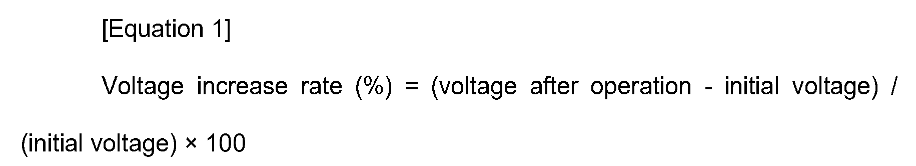 Voltage increase rate (%) = (voltage after operation - initial voltage)/ (initial voltage) × 100

18. The membrane-electrode assembly for the water electrolysis cell of claim 16, wherein
the oxygen evolution electrode comprises the catalyst for the oxygen evolution reaction in a range of 65 wt% to 95 wt% based on 100 wt% of the oxygen evolution electrode.

19. The membrane-electrode assembly for the water electrolysis cell of claim 16, wherein
the polymer electrolyte membrane comprises a porous support comprising a plurality of pores, and an ion conductor filling the pores of the porous support.

20. A water electrolysis cell comprising the membrane-electrode assembly according to claim 16.
